# EUROPEAN PATENT APPLICATION

(11) **EP 3 554 193 A1**
(43) Date of publication of application: **16.10.2019**
(21) Application number: 18166232.1
(22) Date of filing: 09.04.2018
(51) Int. Cl.: H05B 6/12, A47J 37/06

(54) **GRIDDLE FOR AN INDUCTION COOKING HOB**

(71) Applicant: ELECTROLUX APPLIANCES AKTIEBOLAG, 105 45 Stockholm (SE)
(72) Inventor: ROSSATO, Agostino, 47122 Forli (IT); LANDO, Giuseppe, 47122 Forli (IT); BANZATO, Massimo, 47100 Forli (IT)
(74) Representative: Electrolux Group Patents

(57) **Abstract**

The present invention relates to a griddle (10) for an induction cooking hob (12). The griddle (10) is formed as a sheet and includes two large-area sides. The griddle (10) comprises a structure (26) formed on at least one large-area side of said griddle (10), so that a plurality of projections (26) and a bottom (30) are formed on said large-area side. At least one liquid drain is formed on the bottom (30).

## Description

The present invention relates to a griddle for an induction cooking hob.

A griddle for an induction cooking hob is a well-known device. For example, the griddle includes a ferromagnetic coating, which may be often covered by an anti-stick coating. The griddle may be used as cooking grate or teppanyaki.

It is an object of the present invention to provide an improved griddle for an induction cooking hob, which facilitates the cooking process for the user.

The object is achieved by the griddle for an induction cooking hob according to claim 1.

According to the present invention a griddle for an induction cooking hob is provided, wherein:
- the griddle is formed as a sheet and includes two large-area sides,
- the griddle comprises a structure formed on at least one large-area side of said griddle, so that a plurality of projections and a bottom are formed on said large-area side, and
- at least one liquid drain is formed on the bottom.

The main idea of the present invention is the structure of the griddle with the projections on the one hand and the liquid drain on the other hand. The projections are provided as bearing for food stuff, while the liquid drain is provided for keeping sauce, other liquids and/or powder put on said food stuff.

In particular, the griddle comprises at least one heated portion and at least one unheated portion, wherein the heated portion is formed by at least one ferromagnetic coating and/or at least one ferromagnetic sheet element, and wherein preferably said ferromagnetic sheet element is moulded in, pressed on, welded on and/or glued on said griddle.

Further, a central portion of at least one large-area side, preferably of two large-area sides, may be coated by at least one ferromagnetic coating, wherein preferably the surface area of the portion coated by the ferromagnetic coating is limited, so that the heated and unheated portions at and/or on the griddle are formed.

For example, a plurality of elongated ribs is formed on at least one large-area side of the griddle, wherein preferably said ribs are arranged parallel to each other.

Preferably, both large-area sides of the griddle are adapted as cooking surfaces, wherein the large-area side arranged above is provided as cooking surface. Thus, the large-area sides may be exchanged by turning the griddle.

Further, the griddle may comprise at least one anti-stick coating, wherein preferably said anti-stick coating covers the one ferromagnetic coating and the unheated portion. Alternatively or additionally, a temperature resistant coating may be applied onto the ferromagnetic coating, since said temperature resistant coating does not exhaust. Further alternatively, no further coating may be applied onto or may cover the ferromagnetic coating.

In particular, the bottom of the griddle comprises at least one slope, so that the bottom is inclined from the centre to the outer portions of said bottom, wherein preferably the at least one liquid drain is formed in the deepest portion of the bottom.

Additionally, the bottom of the griddle may comprise at least one side wall enclosing said bottom.

Moreover, the griddle may comprise a flat surface formed on a further large-area side of said griddle.

Preferably, the flat surface of the griddle comprises at least one slope, so that the flat surface is inclined from the centre to the outer portions of said flat surface, wherein preferably the at least one liquid drain is formed in the deepest portion of the flat surface.

Further, the griddle may comprise at least one fixation element connectable to a corresponding element of the induction cooking hob.

For example, the griddle comprises at least one foot connectable to a corresponding receiving element of the induction cooking hob.

Additionally, the griddle may comprise or correspond with at least one covering cap, wherein a top wall of said covering cap is adapted to the large-area side of said griddle, and wherein preferably said covering cap is inclined, so that the height of the covering cap decreases with an increasing deepness of the liquid drain. The lower portion of the covering cap is arranged above the deep liquid drain, while the higher portion of the covering cap is arranged above the flat liquid drain. This is advantageous, since the steam flows to the highest position.

In particular, the griddle comprises at least one handle formed in the unheated portion of the griddle.

Moreover, the at least one handle may be adapted for receiving an ingredient bowl.

Preferably, the griddle comprises at least two handles, wherein said two handles are arranged symmetrically.

At last, the griddle may comprise at least one sump formed in the unheated portion of the griddle, wherein said sump is adapted for receiving cooking tools.

Novel and inventive features of the present invention are set forth in the appended claims.

The present invention will be described in further detail with reference to the drawing, in which
- FIG 1: illustrates a schematic perspective view of a griddle on an induction cooking hob according to a preferred embodiment of the present invention,
- FIG 2: illustrates a schematic perspective view of the griddle on the induction cooking hob according to the preferred embodiment of the present invention,
- FIG 3: illustrates a schematic perspective view of a first large-area side of the griddle according to the preferred embodiment of the present invention,
- FIG 4: illustrates a schematic perspective view of a second large-area side of the griddle according to the preferred embodiment of the present invention,
- FIG 5: illustrates a schematic perspective view of the first large-area side of the griddle according to the preferred embodiment of the present invention, wherein a ferromagnetic coating is represented,
- FIG 6: illustrates a schematic perspective view of the second large-area side of the griddle according to the preferred embodiment of the present invention, wherein a ferromagnetic coating is represented,
- FIG 7: illustrates a schematic perspective sectional view of the first large-area side of the griddle according to the preferred embodiment of the present invention,
- FIG 8: illustrates a schematic detailed perspective view of the first large-area side of the griddle according to the preferred embodiment of the present invention, and
- FIG 9: illustrates a further schematic detailed perspective view of the first large-area side of the griddle according to the preferred embodiment of the present invention.

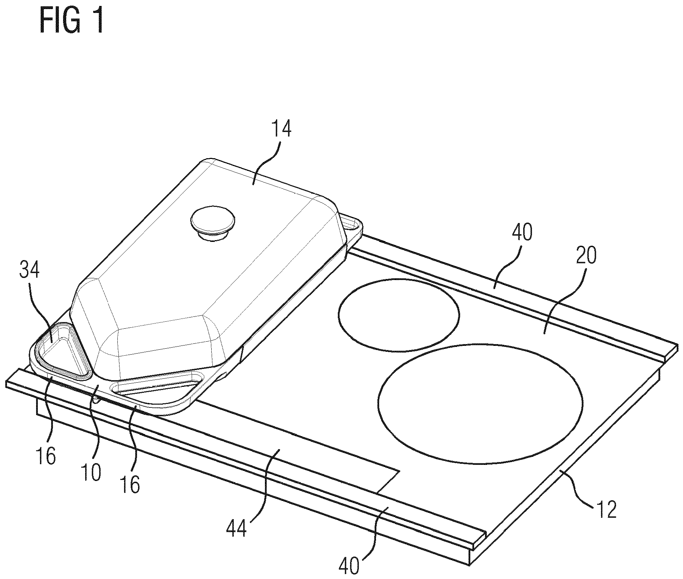

FIG 1 illustrates a schematic perspective view of a griddle 10 on an induction cooking hob 12 according to a preferred embodiment of the present invention.

The griddle 10 is arranged on the induction cooking hob 12. The induction coking hob 12 comprises a number of induction coils 18. For clarity, a cooking panel 20 of the induction cooking hob 12 is represented as transparent in FIG 1. A trim 40 is attached at a front edge and at a rear edge of the cooking panel 20 in each case. A cover cap 14 is arranged upon the griddle 10. Said cover cap 14 includes an inclined top wall in order to avoid food drying by an even distribution of steam.

Preferably, the griddle 10 is made of metal. For example, the griddle 10 is made of aluminium. Thus, the weight of the griddle 10 is relative small. A limited portion of the griddle 10 includes a ferromagnetic coating 24. In contrast, the griddle 10 made of aluminium is not ferromagnetic. Further, a portion of the griddle 10, preferably the whole griddle 10 includes an anti-stick coating 22, wherein the anti-stick coating 22 is applied onto the ferromagnetic coating 24.

The griddle 10 is arranged above at least one induction coil 18 of the induction cooking hob 12. The induction coil 18 generates an electromagnetic field. Said electromagnetic field induces eddy currents in the ferromagnetic coating 24 of the griddle 10, so that the ferromagnetic coating 24 is heated up. The environment of the ferromagnetic coating 24 may be also heated up. The heated portions of the griddle 10 are suitable for broiling or barbequing food stuff.

Moreover, the griddle 10 includes two handles 16 arranged at one face side of said griddle 10. In this example, each handle 16 forms a corner of the griddle 10. The handles 16 include the anti-stick coating 22, but not the ferromagnetic coating 24, so that the handles 16 are not heated up by the electromagnetic field. Further, a control circuit 44 of the induction cooking hob 12, which is arranged beneath the handles 16, is not exposed to the heat. In this example, the handles 16 are arranged symmetrically to each other.

Further, the handles 16 are adapted for receiving an ingredient bowl 34 in each case. In particular, said ingredient bowl 34 is provided for liquid ingredients. The ingredient bowl 34 is removable from the handle 16 and can be replaced from the one handle 16 to the other handle 16. Thus, the handle has two different functions.

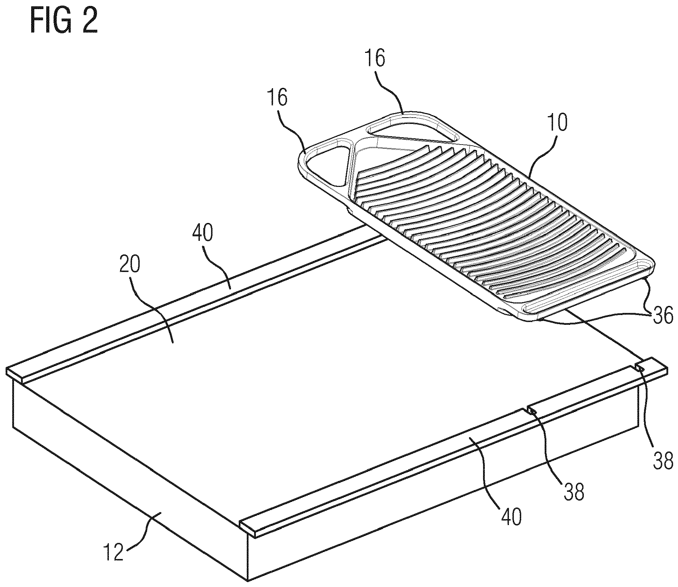

FIG 2 illustrates a schematic perspective view of the griddle 10 on the induction cooking hob 12 according to the preferred embodiment of the present invention. In FIG 2 the cooking panel 20 of the induction cooking hob 12 is shown. The trims 40 are attached at the front edge and rear edge of the cooking panel 20.

The griddle 10 includes the both handles 16 arranged at one face side of said griddle 10. In this example, the ingredient bowl 34 is removed from the handle 16.

Moreover, the griddle 10 includes at least two feet 36 extending downward. Said feet 36 are receivable or received by corresponding bores 38. In this example, the griddle 10 includes at least two feet 36 at the opposite side of the handles 16, wherein the corresponding bores 38 are formed in the trim 40 at the rear edge of the cooking panel 20. The feet 36 of the griddle 10 and the bores 38 in the trim 40 of the induction cooking hob 12 allow that the user can set the griddle 10 onto said induction cooking hob 12 with one hand.

The griddle 10 is formed as sheet and includes a first large area side and a second large-area side. In FIG 2 the first large area side is the top side, while the second large-area side is the bottom side of the griddle 10. Alternatively, the griddle 10 may be arranged that first large area side is the bottom side and the second large-area side is the top side of the griddle 10.

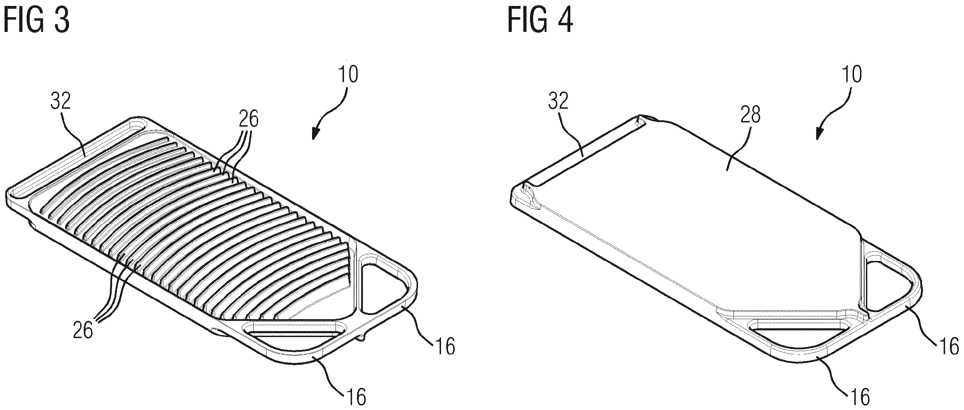

FIG 3 illustrates a schematic perspective view of the first large-area side of the griddle 10 according to the preferred embodiment of the present invention.

A plurality of ribs 26 is formed on the first large-area side of the griddle 10. Said ribs 26 are elongated and are arranged parallel to each other. The ribs 26 extend upward from a bottom 30 of the first large-area side of the griddle 10. In particular, the first large-area side of the griddle 10 is suitable for barbequing food stuff.

Further, the griddle 10 comprises a slope from the centre of the first large-area side to the outer portions of said first large-area side. The bottom 30 of the first large-area side is inclined downwards from the centre to the outer portions. The deepest portion of the bottom 30 forms a liquid drain.

Moreover, the griddle 10 comprises a sump 32 on the first large-area side. Said sump 32 is provided for receiving coking tools. In this example, the sump 32 is arranged opposite to the handles 16. The sump 32 is arranged out of the area with ferromagnetic coating 24.

FIG 4 illustrates a schematic perspective view of the second large-area side of the griddle 10 according to the preferred embodiment of the present invention. The second large-area side of the griddle 10 is arranged opposite to the first large-area side of the griddle 10.

A main portion of the second large-area side of the griddle 10 is formed as a flat surface 28. The second large-area side of the griddle 10 is provided as lower side, when said griddle 10 is arranged on the induction cooking hob 12.

Additionally, the griddle 10 comprises the sump 32 provided for receiving coking tools also on the second large-area side of the griddle 10. In this example, the sump 32 is arranged opposite to the handles 16. The sump 32 is arranged out of the area with ferromagnetic coating 24.

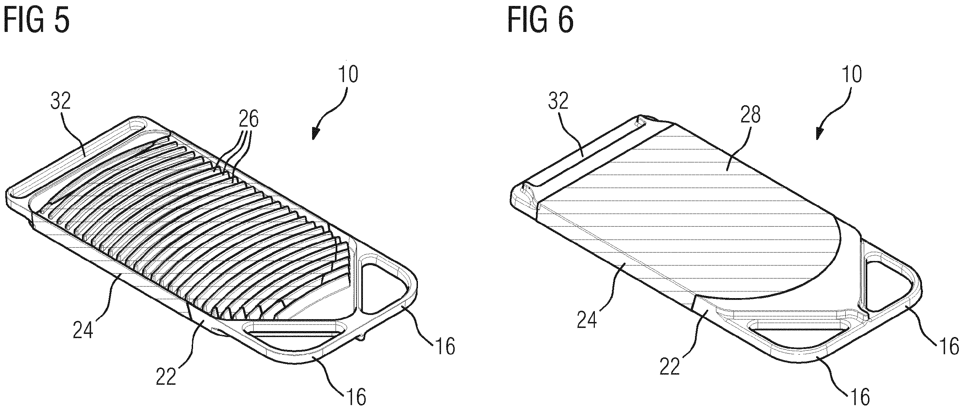

FIG 5 illustrates a schematic perspective view of the first large-area side of the griddle 10 according to the preferred embodiment of the present invention, wherein the ferromagnetic coating 24 is represented. FIG 5 clarifies the extension of the ferromagnetic coating 24 on the first large-area side of the griddle 10.

The ferromagnetic coating 24 is represented by the shaded area. Only a central portion of the first large-area side of the griddle 10 is coated by the ferromagnetic coating 24. Thus, only the portion with the ferromagnetic coating 24 is heated up by the electromagnetic field of the induction coil 18, while the residual portion of said first large-area side of the griddle 10 remains cold. In particular, the handles 16 and the sump 32 remain cold.

The residual portion of the griddle 10, preferably the whole griddle 10, includes the anti-stick coating 22, wherein said anti-stick coating 22 is applied onto the ferromagnetic coating 24. Thus, the ferromagnetic coating 24 is coated by the anti-stick coating 22. Preferably, a temperature resistant coating is applied onto the ferromagnetic coating 24, since said temperature resistant coating does not exhaust. Alternatively, on the ferromagnetic coating 24 is no any further coating.

FIG 6 illustrates a schematic perspective view of the second large-area side of the griddle 10 according to the preferred embodiment of the present invention, wherein the ferromagnetic coating 24 is represented.

The ferromagnetic coating 24 is represented by the shaded area. Only the central portion of the second large-area side of the griddle 10 is coated by the ferromagnetic coating 24. Thus, only the portion with the ferromagnetic coating 24 is heated up by the electromagnetic field of the induction coil 18, while the residual portion of said second large-area side of the griddle 10 remains cold. In particular, the handles 16 and the sump 32 remain cold.

The residual portion of the griddle 10, preferably the whole griddle 10, includes the anti-stick coating 22. The anti-stick coating 22 may be also applied onto the ferromagnetic coating 24, so that the ferromagnetic coating 24 is coated by the anti-stick coating 22. Preferably, a temperature resistant coating is applied onto the ferromagnetic coating 24, since said temperature resistant coating does not exhaust. Alternatively, on the ferromagnetic coating 24 no further coating is applied.

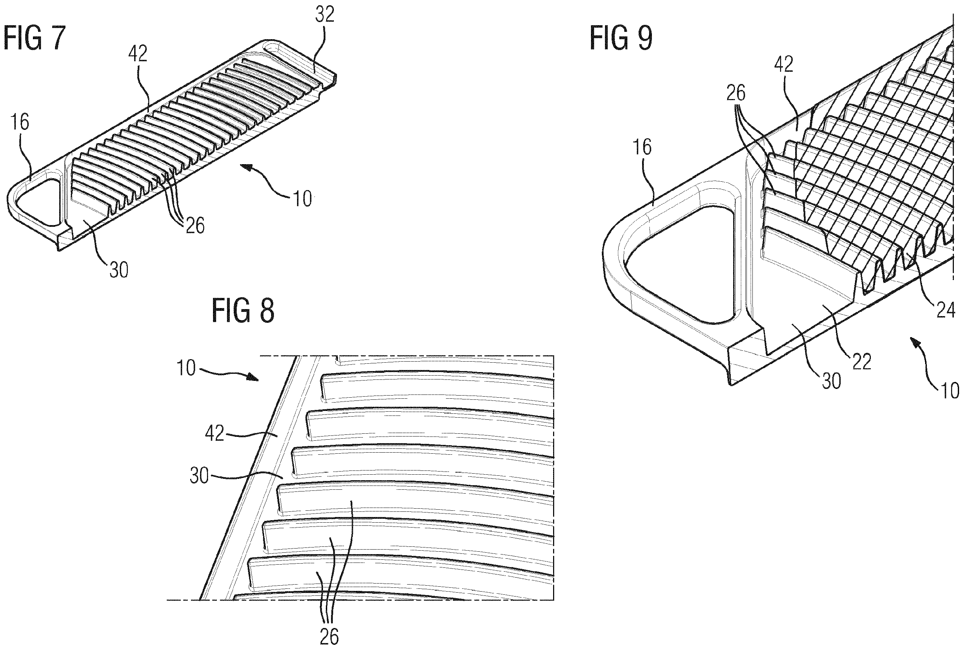

FIG 7 illustrates a schematic perspective sectional view of the first large-area side of the griddle 10 according to the preferred embodiment of the present invention. FIG 7 clarifies the structure of the ribs 26 and the bottom 30 of the first large-area side of the griddle 10. The ribs 26 are arranged horizontally and parallel to each other. The ribs 26 extend upwards from the bottom 30. Further, the griddle 10 includes a side wall 42 enclosing the bottom 30. The side wall 42 and the ribs 26 have substantially the same heights. The liquid drain is formed in the deepest portion of the bottom 30.

FIG 8 illustrates a schematic detailed perspective view of the first large-area side of the griddle 10 according to the preferred embodiment of the present invention. FIG 8 clarifies the structure of the ribs 26, the bottom 30 and the side wall 42 of the first large-area side of the griddle 10. The ribs 26 are arranged horizontally and parallel to each other and extend upwards from the bottom 30. The side wall 42 and the ribs 26 have substantially the same heights. The liquid drain is formed by connections of channels between the ribs 26.

FIG 9 illustrates a further schematic detailed perspective view of the first large-area side of the griddle 10 according to the preferred embodiment of the present invention. FIG 9 clarifies the extension of the ferromagnetic coating 24 on the griddle 10.

Most of the ribs 26 are coated by the ferromagnetic coating 24. In contrast, the liquid drain in the deepest portion of the bottom 30 is not coated by the ferromagnetic coating 24, but only by the anti-stick coating 22. This avoids frying of meat fats in the liquid drain.

Although an illustrative embodiment of the present invention has been described herein with reference to the accompanying drawings, it is to be understood that the present invention is not limited to that precise embodiment, and that various other changes and modifications may be affected therein by one skilled in the art without departing from the scope or spirit of the invention. All such changes and modifications are intended to be included within the scope of the invention as defined by the appended claims.

### List of reference numerals

- 10: griddle
- 12: induction cooking hob
- 14: covering cap
- 16: handle
- 18: induction coil
- 20: cooking panel
- 22: anti-stick coating
- 24: ferromagnetic coating
- 26: rib
- 28: flat surface
- 30: bottom
- 32: sump
- 34: ingredient bowl
- 36: foot
- 38: bore
- 40: trim
- 42: side wall
- 44: control circuit

## Claims

1. A griddle (10) for an induction cooking hob (12), wherein:
- the griddle (10) is formed as a sheet and includes two large-area sides,
- the griddle (10) comprises a structure (26) formed on at least one large-area side of said griddle (10), so that a plurality of projections (26) and a bottom (30) are formed on said large-area side, and
- at least one liquid drain is formed on the bottom (30).

2. The griddle according to claim 1,
**characterised in that**
the griddle (10) comprises at least one heated portion and at least one unheated portion, wherein the heated portion is formed by at least one ferromagnetic coating (24) and/or at least one ferromagnetic sheet element, and wherein preferably said ferromagnetic sheet element is moulded in, pressed on, welded on and/or gluzed on said griddle (10).

3. The griddle according to claim 1 or 2,
**characterised in that**
a central portion of at least one large-area side, preferably of two large-area sides, is coated by at least one ferromagnetic coating (24), wherein preferably the surface area of the portion coated by the ferromagnetic coating (24) is limited, so that the heated and unheated portions at and/or on the griddle (10) are formed.

4. The griddle according to any one of the preceding claims,
**characterised in that**
a plurality of elongated ribs (26) is formed on at least one large-area side of the griddle (26), wherein preferably said ribs (26) are arranged parallel to each other.

5. The griddle according to any one of the preceding claims,
**characterised in that**
both large-area sides of the griddle (26) are adapted as cooking surfaces, wherein the large-area side arranged above is provided as cooking surface.

6. The griddle according to any one of the preceding claims,
**characterised in that**
the griddle (26) comprises at least one anti-stick coating (22), wherein preferably said anti-stick coating (22) covers the one ferromagnetic coating (24) and the unheated portion.

7. The griddle according to any one of the preceding claims,
**characterised in that**
the bottom (30) of the griddle (26) comprises at least one slope, so that the bottom (30) is inclined from the centre to the outer portions of said bottom (30), wherein preferably the at least one liquid drain is formed in the deepest portion of the bottom (30).

8. The griddle according to any one of the preceding claims,
**characterised in that**
the bottom (30) of the griddle (26) comprises at least one side wall (42) enclosing said bottom (30).

9. The griddle according to any one of the preceding claims,
**characterised in that**
the griddle (26) comprises a flat surface (28) formed on a further large-area side of said griddle (10).

10. The griddle according to claim 9,
**characterised in that**
the flat surface (28) of the griddle (26) comprises at least one slope, so that the flat surface (28) is inclined from the centre to the outer portions of said flat surface (28), wherein preferably the at least one liquid drain is formed in the deepest portion of the flat surface (28).

11. The griddle according to any one of the preceding claims,
**characterised in that**
the griddle (26) comprises at least one fixation element (36) connectable to a corresponding element (38) of the induction cooking hob (12), wherein preferably the griddle (26) comprises at least one foot (36) connectable to a corresponding receiving element (38) of the induction cooking hob (12).

12. The griddle according to any one of the preceding claims,
**characterised in that**
the griddle (26) comprises or corresponds with at least one covering cap (14), wherein a top wall of said covering cap (14) is adapted to the large-area side of said griddle (26), and wherein preferably said covering cap (14) is inclined, so the height of the covering cap (14) decreases with an increasing deepness of the liquid drain.

13. The griddle according to any one of the preceding claims,
**characterised in that**
the griddle (26) comprises at least one handle (16) formed in the unheated portion of the griddle (10), wherein preferably the at least one handle (16) is adapted for receiving an ingredient bowl (34).

14. The griddle according to claim 13,
**characterised in that**
the griddle (26) comprises at least two handles (16), wherein said two handles are arranged symmetrically.

15. The griddle according to any one of the preceding claims,
**characterised in that**
the griddle (26) comprises at least one sump (32) formed in the unheated portion of the griddle (10), wherein said sump (32) is adapted for receiving cooking tools.
